# EUROPÄISCHE PATENTSCHRIFT

(11) **EP 3 567 309 B1**
(45) Veröffentlichungstag und Bekanntmachung des Hinweises auf die Patenterteilung: **21.05.2025**
(21) Anmeldenummer: 19172090.3
(22) Anmeldetag: 01.05.2019
(51) Int. Cl.: F21S 45/40, F02M 35/02, F02M 35/024

(54) **LUFTANSAUGVORRICHTUNG FÜR EIN MIT EINER BRENNKRAFTMASCHINE AUSGESTATTETES FAHRZEUG**
AIR INTAKE DEVICE FOR A MOTOR VEHICLE PROVIDED WITH AN INTERNAL COMBUSTION ENGINE
DISPOSITIF D'ASPIRATION D'AIR POUR UN VÉHICULE ÉQUIPÉ D'UN MOTEUR À COMBUSTION INTERNE

(30) Priorität: 09.05.2018 DE 102018111179
(43) Veröffentlichungstag der Anmeldung: 13.11.2019
(73) Patentinhaber: KTM AG, 5230 Mattighofen (AT)
(72) Erfinder: Contardo, Luca, 5201 Seekirchen am Wallersee (AT); Guzhov, Anton, 80333 München (DE)
(74) Vertreter: Söllner, Udo

(56) Entgegenhaltungen:
- DE-A1- 102013 211 357
- JP-A- 2011 173 504
- JP-A- H11 208 554

## Beschreibung

Die vorliegende Erfindung betrifft eine Luftansaugvorrichtung für ein mit einer Brennkraftmaschine ausgestattetes Fahrzeug, mit einer gereinigte Ansaugluft für die Verbrennung in Richtung zur Brennkraftmaschine führenden Einrichtung und einem Luftfilterelement sowie einem das Luftfilterelement aufnehmenden Gehäuse und mindestens einer Luftführungseinrichtung, welche kanalförmig ausgebildet ist und zur Führung von Ansaugluft zum Gehäuse vorgesehen ist und sich die Luftführungseinrichtung im Bereich zwischen einer Halteeinrichtung und dem Gehäuse erstreckt, nach dem Oberbegriff des Anspruchs 1.

Anhand eines auf die Anmelderin zurückgehenden Motorrads ist eine gattungsgemäße Luftansaugvorrichtung bekannt geworden, wie sie vorstehend beschrieben wurde und bei der zwei Luftführungseinrichtungen in der Form von mit einem rechteckigen Querschnitt versehenen Kanälen vorgesehen sind, die in ein Gehäuse münden, in dem ein Luftfilterelement vorgesehen ist. Die gereinigte Luft wird dann mittels einer Einrichtung in der Form von zwei Luftführungen einer Drosselklappeneinrichtung und stromabwärts dieser der Brennkraftmaschine zugeführt.

Diese vorstehend erwähnten Kanäle erstrecken sich dabei von einer stirnseitigen Vorderseite des Gehäuses ausgehend in Fahrtrichtung des Motorrads betrachtet in Richtung nach vorne und beiderseitig von einer Längsmittelebene des Gehäuses ausgehend nach außen, sodass sich die jeweilige Lufteintrittsöffnung des Kanals in einer Ansicht auf die bekannte Konfiguration von oben außerhalb der äußeren seitlichen Umrissbegrenzungslinien des Gehäuses befinden. Diese Konfiguration ist erforderlich, da sich die Kanäle mit ihren Lufteintrittsöffnungen um eine den Hauptscheinwerfer des Motorrads aufnehmende Lampenmaske herum erstrecken müssen, da die Lampenmaske, die mit ihrer flächigen seitlichen Erstreckung den Hauptscheinwerfer aufnimmt und umgibt, andernfalls den Eintritt von Frischluft oder Ansaugluft in die Lufteintrittsöffnungen der Kanäle behindert.

Das genannte Fahrzeug besitzt seitlich eines Hauptrahmens des Motorrads angeordnete Seitenverkleidungselemente, welche die Kanäle seitlich abdecken, sodass sich die Lufteintrittsöffnungen innerhalb der Seitenverkleidungselemente befinden.

Obwohl sich diese Konfiguration bereits bestens bewährt hat, besitzt sie dennoch Raum für Verbesserungen dahingehend, dass in Fahrzeuglängsrichtung die Baubreite der bekannten Luftansaugvorrichtung zu verringern ist und damit die Baubreite des Fahrzeugs insgesamt verringert werden kann, womit gleichzeitig die den Fahrwiderstand des Motorrads beeinflussende Stirnfläche verringert werden kann.

Auch anhand der JP 2011 173504 A ist eine Luftansaugvorrichtung nach dem Oberbegriff des Anspruchs 1 bekannt geworden.

Ausgehend hiervon liegt der vorliegenden Erfindung die Aufgabe zugrunde, die bekannte Luftansaugvorrichtung derart weiterzubilden, dass sich eine Luftansaugvorrichtung mit quer zur Fahrzeuglängsrichtung betrachtet verringerter Baubreite einstellt und somit die Baubreite des Fahrzeugs insgesamt verringert werden kann. Auch soll ein mit der bereitzustellenden Luftansaugvorrichtung versehenes Fahrzeug bereitgestellt werden.

Die Erfindung weist zur Lösung dieser Aufgabe hinsichtlich der Luftansaugvorrichtung die im Anspruch 1 angegebenen Merkmale auf. Vorteilhafte Ausgestaltungen hiervon sind in den weiteren Ansprüchen beschrieben. Darüber hinaus weist die Erfindung hinsichtlich des zu schaffenden Fahrzeugs die im Anspruch 11 angegebenen Merkmale auf.

Die Erfindung schafft eine Luftansaugvorrichtung für ein mit einer Brennkraftmaschine ausgestattetes Fahrzeug, mit einer gereinigte Ansaugluft für die Verbrennung in Richtung zur Brennkraftmaschine führenden Einrichtung und einem Luftfilterelement sowie einem das Luftfilterelement aufnehmenden Luftfiltergehäuse und mindestens einer Luftführungseinrichtung, welche kanalförmig ausgebildet und zur Führung von Ansaugluft zum Luftfiltergehäuse vorgesehen ist und sich die Luftführungseinrichtung im Bereich zwischen einer Halteeinrichtung und dem Luftfiltergehäuse erstreckt, wobei die Halteeinrichtung beidseits einer in Fahrtrichtung vertikalen Längsmittelebene eine Seitenwand mit einer Aufnahmefläche besitzt, an der eine jeweilige Leiterplatte mit mindestens einem an der Leiterplatte angeordneten Leuchtmittel angeordnet ist, und die jeweilige Aufnahmefläche eine Fläche aufweist, welche zur Übertragung von vom Leuchtmittel abgegebener Wärme an die jeweilige Seitenwand eingerichtet ist, und die Halteeinrichtung einen zu den Leuchtmitteln benachbarten Luftleitkanal aufweist, der mit der Luftführungseinrichtung luftführend verbunden ist, wobei der Luftleitkanal zwischen den einander gegenüberliegenden Seitenwänden der Halteeinrichtung ausgebildet ist.

Mit der erfindungsgemäßen Ausgestaltung der Luftansaugvorrichtung wird erreicht, dass durch die Integration des dem Leuchtmittel benachbarten Luftleitkanals in die Halteeinrichtung in der Form der Halteeinrichtung ein multifunktionales Bauteil bereitgestellt wird, welches sowohl zur Aufnahme mindestens eines Leuchtmittels ausgebildet ist als auch gleichzeitig die Funktion der Leitung oder Führung der Ansaugluft mittels des Luftleitkanals zur Luftführungseinrichtung ausführt.

Die Halteeinrichtung wird in vorteilhafter Weise in Fahrzeuglängsrichtung beispielsweise mittig oder im Bereich der Längsmittelebene des Fahrzeugs angeordnet, sodass sich die Luftführungseinrichtung von der Halteeinrichtung ausgehend in Richtung zum Gehäuse der Luftansaugvorrichtung erstreckt.

Die Halteeinrichtung wird in vorteilhafter Weise am Fahrzeug vorne angeordnet, d. h. in Fahrzeuglängsrichtung betrachtet oder Fahrtrichtung des Fahrzeugs bei einer Vorwärtsfahrt am oder in der Nähe des vorderen Endbereichs des Fahrzeugs, sodass bei einer Vorwärtsfahrt des Fahrzeugs die Ansaugluft über den Luftleitkanal der Halteeinrichtung in die Luftführungseinrichtung gelangt. Es findet also durch diese Konfiguration in Abhängigkeit von der Fahrgeschwindigkeit des Fahrzeugs eine Staudruckaufladung statt und zudem sorgt die Konfiguration, dass sich der Luftleitkanal benachbart zum Leuchtmittel angeordnet befindet, dafür, dass der den Luftleitkanal durchströmende Ansaugluftstrom die vom Leuchtmittel auf die Halteeinrichtung übertragene Wärme abführen kann. Die Halteeinrichtung wirkt also gleichzeitig als Kühlkörper oder Kühleinrichtung für das oder die Leuchtmittel.

Bei dem oder den Leuchtmitteln kann es sich in vorteilhafter Weise um Leuchtdioden handeln, welche beispielsweise an einer Steuerplatine oder Schaltplatine angeordnet sind, die gleichzeitig der Aufnahme der Leuchtdiode oder der Leuchtdioden dient und die so in oder an der Halteeinrichtung angeordnet ist, dass die Abwärme der Leuchtdioden und der auf der Steuerplatine oder Schaltplatine angeordneten Steuerelektronik auf die Halteeinrichtung übertragen wird, welche von dem Luftleitkanal durchzogen oder durchsetzt ist, sodass die den Luftleitkanal durchströmende Ansaugluft gleichzeitig als Kühlluftstrom fungieren kann.

Durch die Konfiguration, dass sich die Luftführungseinrichtung im Bereich zwischen der Halteeinrichtung und dem Gehäuse erstreckt, wird erreicht, dass sich die Luftführungseinrichtung vom Gehäuse der Luftansaugvorrichtung in Richtung nach vorne erstreckt und sich somit in Fahrtrichtung des Fahrzeugs betrachtet eng an der Längsmittelebene des Fahrzeugs anschmiegt und somit verglichen mit der bekannten Luftansaugvorrichtung eine deutliche Verringerung der Erstreckung der Luftansaugvorrichtung in Breitenrichtung des Fahrzeugs erreicht wird.

Somit wird durch die erfindungsgemäße Luftansaugvorrichtung eine multifunktionale Einrichtung geschaffen, die der Luftzuführung für die Brennkraftmaschine dient, gleichzeitig die Breitenerstreckung des Fahrzeugs verringert und zudem als Kühlkörper oder Kühleinrichtung für das oder die Leuchtmittel des Fahrzeugs dient.

Es ist nach einer Weiterbildung der Erfindung vorgesehen, dass die Luftführungseinrichtung mindestens zwei abschnittsweise weitgehend parallel verlaufende Luftführungskanäle aufweist, die an einem Endbereich einstückig miteinander verbunden ausgebildet sind.

Diese Konfiguration sorgt dafür, dass die parallel verlaufenden Luftführungskanäle vom Gehäuse der Luftansaugvorrichtung ausgehend an der Längsmittelebene des Fahrzeugs eng anliegend vorgesehen sind und so der in die Luftführungskanäle eintretende Ansaugluftstrom mit hoher Strömungsgeschwindigkeit in Richtung zum Gehäuse der Luftansaugvorrichtung strömen kann und auf diese Weise Fluidreibungsverluste durch Wandanlagerungen des Luftstroms in den Luftführungskanälen verringert werden können.

Es ist nach einer Weiterbildung der Erfindung vorgesehen, dass die Luftansaugvorrichtung einen jeweiligen Luftführungskanal besitzt, der mittels einer gekrümmt ausgebildeten Ansaugluftleitung mit einer Einlassöffnung des Gehäuses luftführend verbunden ist und ein jeweiliger Endbereich des Luftführungskanals mit einem zugeordneten Anschlussbereich der Ansaugluftleitung in der Form einer gesteckten Verbindung lösbar verbindbar ausgebildet ist.

Diese Konfiguration führt dazu, dass der jeweilige Luftführungskanal vom Luftleitkanal der Halteeinrichtung ausgehend in Richtung des Gehäuses eine einem Schnorchel ähnliche Ansaugluftleitung besitzt, die zur einfachen Montage bei der Fertigung des mit der erfindungsgemäßen Luftansaugvorrichtung ausgestatteten Fahrzeugs ohne Werkzeugeinsatz mittels der Herbeiführung einer einfachen Steckverbindung zwischen der Ansaugluftleitung und dem Luftführungskanal hergestellt werden kann.

Es hat sich als vorteilhaft erwiesen, wenn die Ansaugluftleitung vom Luftführungskanal ausgehend eine bereichsweise oder abschnittsweise nach unten gerichtete Konfiguration aufweist, da auf diese Weise in den Luftleitkanal der Halteeinrichtung bei einer Fahrt des Fahrzeugs im Regen in Richtung zur Ansaugluftleitung eintretendes Wasser über eine beispielsweise in der Ansaugluftleitung vorgesehene Ablaufbohrung abgeleitet werden kann, bevor es in das Gehäuse der Luftansaugvorrichtung eintritt.

Es ist nach einer Weiterbildung der Erfindung vorgesehen, dass die Halteeinrichtung ein mit dem zwischen Seitenwänden angeordneten Luftleitkanal ausgebildeter Körper ist, der die Seitenwände verbindende und zusammen mit den Seitenwänden den Luftleitkanal einschließende erste und zweite Körperelemente aufweist und einen Lufteintrittsbereich sowie einen der Luftführungseinrichtung zugewandten Luftaustrittsbereich aufweist.

Die Seitenwände können gleichzeitig als Kühlkörper für die Ableitung der von dem oder den Leuchtmitteln und deren Steuerelektronik abgegebener Wärme dienen und bilden zusammen mit den ersten und zweiten Körperelementen, welche die Seitenwände verbinden, einen den Luftleitkanal einschließenden Bereich aus, der im in Fahrtrichtung des Fahrzeugs vorderen Bereich der Halteeinrichtung einen Lufteintrittsbereich ausbildet und im in Fahrtrichtung des Fahrzeugs hinteren Bereich der Halteeinrichtung einen Luftaustrittsbereich aufweist, der der Luftführungseinrichtung zugewandt ist. Der Luftleitkanal der Halteeinrichtung kann im Bereich zwischen dem Lufteintrittsbereich und dem Luftaustrittsbereich beispielsweise auch eine sich verjüngende Konfiguration aufweisen, sodass die den Luftleitkanal durchströmende Ansaugluft eine Strömungsbeschleunigung erfährt.

Es ist nach einer Weiterbildung der Erfindung auch vorgesehen, dass die Halteeinrichtung mindestens eine Aufnahmefläche zur Anordnung mindestens eines Leuchtmittels aufweist und die Aufnahmefläche zur Ableitung von Wärme des Leuchtmittels ausgebildet ist.

Die Aufnahmefläche kann beispielsweise zur Anordnung der vorstehend erwähnten Steuerplatine oder Schaltplatine dienen, sodass die von den beispielsweise als Leuchtdioden ausgebildeten Leuchtmitteln abgegebene Wärme über die Aufnahmefläche an die Seitenwände der Halteeinrichtung abgegeben wird, welche an der dem Luftleitkanal zugewandten Seite von der durch den Luftleitkanal durchströmenden Ansaugluft aktiv gekühlt werden.

Es ist nach einer Weiterbildung der Erfindung auch vorgesehen, dass die Halteeinrichtung an einem der Luftführungseinrichtung zugewandten Endbereich des Luftleitkanals eine zur Konfiguration eines Lufteintrittsbereichs der Luftführungseinrichtung weitgehend form- und flächenkomplementäre Konfiguration aufweist.

Die Halteeinrichtung kann bei ihrer Anordnung an beispielsweise einem Motorrad im Bereich der oberen Gabelbrücken einer Vorderradgabel des Motorrads angeordnet sein, sodass die Halteeinrichtung bei Lenkbewegungen des Motorrads zusammen mit der Vorderradgabel relativ zur Längsmittelachse beziehungsweise Längsmittelebene des Motorrads Verschwenkbewegungen erfährt und sich so eine Winkelveränderung des Luftaustrittsbereichs des Luftleitkanals der Halteeinrichtung relativ zum Lufteintrittsbereich der Luftführungseinrichtung einstellt.

Durch die form- und flächenkomplementäre Konfiguration des Endbereichs des Luftleitkanals relativ zum Lufteintrittsbereich der Luftführungseinrichtung wird erreicht, dass der den Luftleitkanal weitgehend laminar durchströmende Ansaugluftstrom im Übergangsbereich zwischen dem Luftleitkanal und dem Lufteintrittsbereich der Luftführungseinrichtung nur wenige, die laminare Strömung beeinträchtigende Fluidstörungen erfährt und sich somit eine hohe Strömungsgeschwindigkeit im gesamten Ansaugluftbereich vor dem Gehäuse der Luftansaugvorrichtung einstellt.

Es ist nach einer Weiterbildung der Erfindung auch vorgesehen, dass die Halteeinrichtung an vom Luftführungskanal abgewandten Außenbereichen der Seitenwände Aufnahmeflächen zur Anordnung von Leuchtmittel überdeckenden Abdeckscheiben aufweist.

Durch diese Konfiguration wird es erreicht, dass beidseits des Luftführungskanals, der die Halteeinrichtung vollständig durchsetzen kann, an den Seitenwänden Abdeckscheiben angeordnet werden können, welche so beidseits des Luftführungskanals angeordnet sind und jeweils einen Aufnahmeraum zwischen den Seitenwänden und den Abdeckscheiben begrenzen, in welchem das oder die Leuchtmittel angeordnet sein können.

Auf diese Weise befindet sich beidseits des Luftführungskanals jeweils ein Aufnahmeraum angeordnet, in dem beispielsweise die Steuerplatine mit den daran angeordneten Leuchtdioden an der jeweiligen, vorstehend bereits erwähnten Aufnahmefläche angeordnet sind und der jeweilige Aufnahmeraum außen von der Abdeckscheiben überspannt wird. Der Luftführungskanal durchsetzt die Halteeinrichtung vollständig und befindet sich daher zwischen den Abdeckscheiben angeordnet und die durch den Luftführungskanal strömende Ansaugluft kühlt die dem Luftführungskanal jeweils zugeordnete Rückseite der jeweiligen Seitenwand. Durch die beidseits des Luftführungskanals vorgesehenen Aufnahmeräume für Leuchtmittel können eine dem jeweiligen Bedarf an Leuchtstärke der Leuchtmittel des Fahrzeugs angepasste Zahl an Leuchtmittel in der Form von beispielsweise Leuchtdioden integriert werden.

Es ist nach einer Weiterbildung der Erfindung vorgesehen, dass Seitenwände der Halteeinrichtung in einer Seitenansicht eine einem Dreieck ähnliche Konfiguration aufweisen und obere Bereiche der Seitenwände mit dem ersten Körperelement einstückig ausgebildet sind und die Seitenwände im Abstand zu unteren Bereichen der Seitenwände mit dem zweiten Körperelement einstückig ausgebildet sind. Durch diese Konfiguration wird gleichsam ein einem Einlauftrichter ähnliche Konfiguration des Luftleitkanals der Halteeinrichtung ausgebildet, die für eine hohe Strömungsgeschwindigkeit der Ansaugluft im Bereich des Luftleitkanals der Halteeinrichtung sorgt.

Es ist nach einer Weiterbildung der Erfindung vorgesehen, dass die Halteeinrichtung Mittel zur Anordnung von mindestens einer, mindestens ein Leuchtmittel tragender Aufnahme aufweist und das Mittel und/oder die Aufnahme und/oder das Leuchtmittel mit der Halteeinrichtung zur Wärmeübertragung auf die Halteeinrichtung funktional gekoppelt ist.

Bei dem Mittel kann es sich beispielsweise um eine oder mehrere Gewindebohrungen handeln, an denen die ein Leuchtmittel tragende Aufnahme in der Form beispielsweise einer Leiterplatte festgelegt werden kann. Bei dem Mittel kann es sich beispielsweise auch um eine zur Aufnahme eines elastischen Bauteils in der Form beispielsweise eines aus einem Elastomer ausgebildeten Abstandhalters ausgebildeten Ausnehmung handeln, sodass mit dem oder den elastischen Abstandhaltern die Leiterplatte mit den daran angeordneten Leuchtdioden schwingungsbedämpft oder schwingungsentkoppelt an der Halteeinrichtung festgelegt werden kann. Diese Konfiguration sorgt dafür, dass beispielsweise von der Brennkraftmaschine des Fahrzeugs induzierte Schwingungen nicht oder nur gedämpft auf die Leuchtdioden übertragen werden.

Es ist nach einer Weiterbildung der Erfindung auch vorgesehen, dass der Luftleitkanal der Halteeinrichtung mit einer Führungseinrichtung oder Führungsfläche zur Führung von den Luftleitkanal durchströmender Luft in Kontakt mit einer vom Wärme abgebenden Leuchtmittel erwärmten Fläche mindestens einer Seitenwand ausgebildet ist.

Bei der Führungseinrichtung oder Führungsfläche kann es sich beispielsweise um eine in den Luftleitkanal integrierte Luftleitfläche handeln, welche die in den Luftleitkanal strömende Ansaugluft gezielt auf den Bereich der Seitenwand beziehungsweise der Seitenwände der Halteeinrichtung leitet, der über die Abwärme der Leuchtmittel am meisten erwärmt wird.

Es ist nach einer Weiterbildung der Erfindung auch vorgesehen, dass der Endbereich der Luftführungseinrichtung einen sich in Richtung zum Lufteintrittsbereich querschnittlich erweiternden Übergangsbereich besitzt, welcher dem Luftleitkanal der Halteeinrichtung zugeordnet ist.

Auf diese Weise wird erreicht, dass die aus dem Luftaustrittsbereich des Luftleitkanals der Halteeinrichtung ausströmende Ansaugluft auch bei einer Winkelveränderung der Halteeinrichtung relativ zur Luftführungseinrichtung, beispielsweise aufgrund der vorstehend bereits erwähnten Verschwenkbewegungen der Halteeinrichtung bei Lenkbewegungen am Fahrzeug, gezielt in den Lufteintrittsbereich der Luftführungseinrichtung tritt und nicht beispielsweise stumpf auf eine den Lufteintrittsbereich der Luftführungseinrichtung begrenzende Wandfläche. Diese Konfiguration sorgt dafür, dass eine hohe Geschwindigkeit der den Luftleitkanal durchsetzenden Ansaugluft auch bei Lenkbewegungen beibehalten bleibt.

Die Erfindung schafft schließlich auch ein Fahrzeug mit mindestens einem Vorderrad sowie mindestens einem Hinterrad und einer Brennkraftmaschine, welche eine Luftansaugvorrichtung aufweist, wie sie vorstehend beschrieben wurde. Bei dem Fahrzeug kann es sich beispielsweise um eine einspuriges Fahrzeug in der Form eines Motorrads handeln, oder auch um ein mehr als einspuriges Fahrzeug in der Form eines All-Terrain Vehicles oder ATVs oder Quads.

Die Erfindung wird im folgenden anhand der Zeichnung näher erläutert. Diese zeigt in:
Fig. 1 eine Ausführungsform der Luftansaugvorrichtung nach der Erfindung in einer Explosionsdarstellung;
Fig. 2 eine weitere Explosionsdarstellung von Elementen der Luftansaugvorrichtung;
Fig. 3 eine Ansicht von oben auf Elemente der Luftansaugvorrichtung;
Fig. 4 eine schematische Darstellung zur Erläuterung der Führung der Ansaugluft in Richtung zum Gehäuse der Luftansaugvorrichtung;
Fig. 5 eine perspektivische Darstellung einer Halteeinrichtung der Luftansaugvorrichtung;
Fig. 6 eine Darstellung der Halteeinrichtung in einer rechten Seitenansicht;
Fig. 7 eine Darstellung der Halteeinrichtung in einer linken Seitenansicht;
Fig. 8 eine Ansicht von oben auf die Halteeinrichtung;
Fig. 9 eine teilweise Explosionsdarstellung einer Luftansaugvorrichtung nach einer modifizierten Ausführungsform;
Fig. 10 eine schematische Darstellung einer Ansicht von oben auf eine Luftansaugvorrichtung nach der modifizierten Ausführungsform in eine Drehwinkelstellung;
Fig. 11 eine Ansicht von oben auf ein mit der erfindungsgemäßen Luftansaugvorrichtung ausgestattetes Motorrad;
Fig. 12 zum Vergleich mit der Fig. 11 eine Ansicht von oben auf ein mit der bekannten Luftansaugvorrichtung ausgestattetes Motorrad; und
Fig. 13 eine Seitenansicht eines schematisch dargestellten Motorrads mit der erfindungsgemäßen Luftansaugvorrichtung.

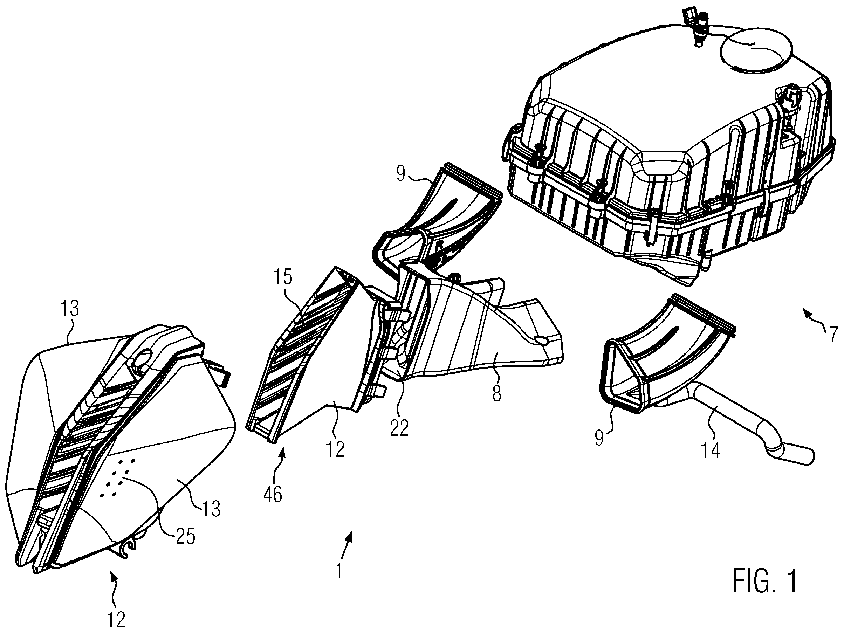

Fig. 1 der Zeichnung zeigt eine Explosionsdarstellung einer Ausführungsform einer Luftansaugvorrichtung 1 gemäß der vorliegenden Erfindung.

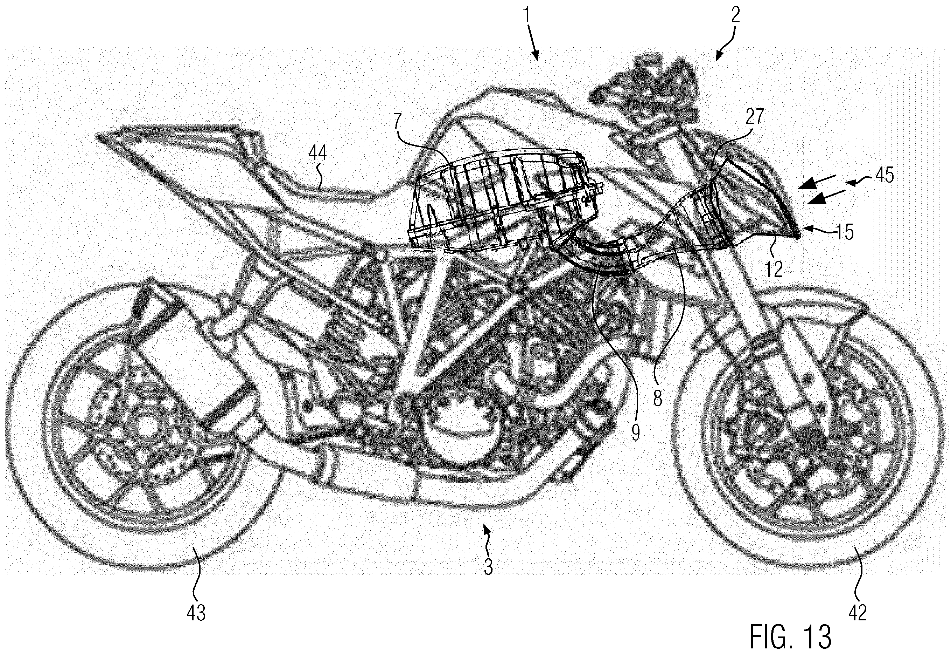

Die Luftansaugvorrichtung 1 ist beispielsweise zur Anordnung an dem in Fig. 13 der Zeichnung dargestellten Motorrad 2 vorgesehen. Das Motorrad 2 besitzt eine Brennkraftmaschine 3, bei der es sich bei der dargestellten Ausführungsform des Motorrads um einen V2 Motor handelt.

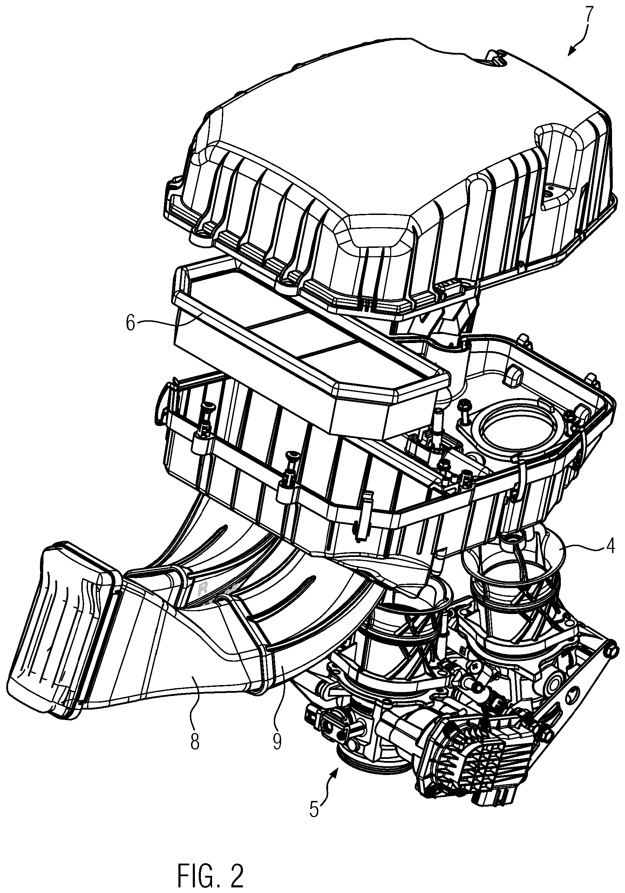

Die Luftansaugvorrichtung 1 besitzt eine gereinigte Ansaugluft in Richtung zur Brennkraftmaschine führende Einrichtung, bei der es sich ganz allgemein um einen kanalförmigen Körper oder ein Luftführungsmittel handeln kann, und bei der es sich bei der dargestellten Ausführungsform um in Fig. 2 der Zeichnung ersichtliche Trichter oder Luftführungstrichter 4 handelt, welche beispielsweise auch einen Teil eines Drosselklappenkörpers 5 darstellen können, und dafür vorgesehen sind, die über ein Luftfilterelement 6 gereinigte Ansaugluft in Richtung zu dem Einlassbereich der Brennkraftmaschine 3 für den Eintritt der Ansaugluft und/oder eines Ansaugluft-Kraftstoff-Gemisches in den Brennraum der jeweiligen Zylinder der Brennkraftmaschine 3 führen zu können.

Die Luftansaugvorrichtung 1 weist darüber hinaus ein das Luftfilterelement 6 aufnehmendes Gehäuse 7 auf, und besitzt eine kanalförmige ausgebildete Luftführungseinrichtung 8, welche in Ansaugluftleitungen 9 mündet, welche die noch ungereinigte Ansaugluft in Richtung zum Gehäuse 7 führen.

Nachdem die noch ungereinigte Ansaugluft in das Gehäuse oder Luftfiltergehäuse 7 eingetreten ist, wird sie durch das Luftfilterelement 6 zur Reinigung der Ansaugluft hindurch geführt, und tritt dann über den Innenraum 10 des Gehäuses 7 in Richtung zu den Trichtern 4 weiter und wird dann mit Kraftstoff angereichert, um letztlich in die Brennräume der Brennkraftmaschine 3 zu gelangen.

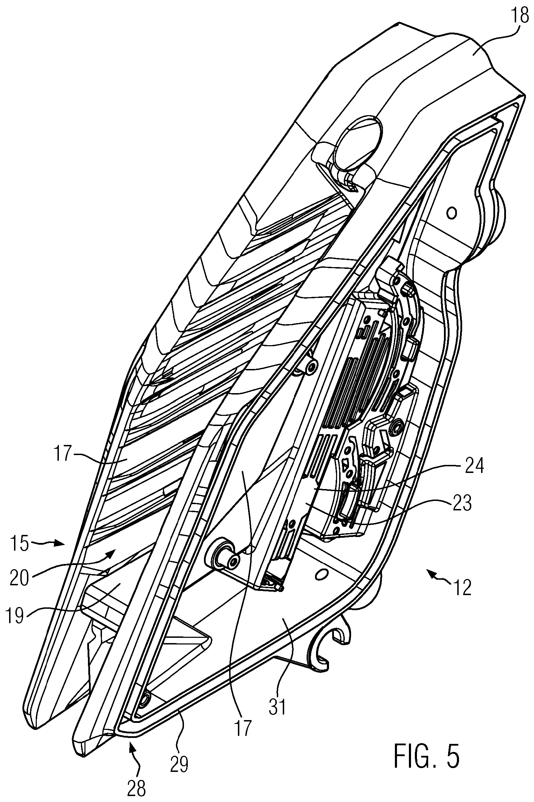

Wie es beispielsweise anhand von Fig. 1 der Zeichnung ersichtlich ist, ist am Lufteintrittsbereich 11 der Luftführungseinrichtung 8 eine näher anhand der Figuren 5 bis 8 der Zeichnung dargestellte Halteeinrichtung 12 vorgesehen, welche sowohl der Führung der Ansaugluft in Richtung zur Luftführungseinrichtung 8 als auch der Aufnahme mindestens eines Leuchtmittels des Motorrads 2 dient und einen ganz allgemein mit dem Bezugszeichen 46 bezeichneten Körper aufweist.

Fig. 1 der Zeichnung zeigt darüber hinaus der Erläuterung halber die Halteeinrichtung 12 auch noch mit Abdeckscheiben 13 versehen, welche dem Schutz und der Abdeckung der an der Halteeinrichtung 12 vorgesehenen Leuchtmittel dienen.

Die Leuchtmittel 25 sind bei der in der Zeichnung dargestellten Halteeinrichtung 12 zu beiden Seiten des Luftleitkanals 15 in den unter den Abdeckscheiben 13 vorgesehenen Innenräumen oder Bereichen angeordnet.

Ein in Fig. 1 der Zeichnung dargestellter Schlauch 14, der an der Ansaugluftleitung 9 angeordnet ist, dient der Ableitung von Kondensat oder Wasser, welches beispielsweise bei einer Fahrt des Motorrads 2 im Regen in die Luftführungseinrichtung 8 eintreten kann und abgeführt wird, bevor er ist in das Gehäuse 7 der Luftansaugvorrichtung 1 eintreten kann. Die zweite Ansaugluftleitung 9 weist ebenfalls einen Schlauch zur Ableitung von Wasser oder Kondensat auf.

Die Halteeinrichtung 12 ist mit einem näher anhand der weiteren Figuren ersichtlichen Luftleitkanal 15 versehen, in den die Ansaugluft am vorderen Bereich eintreten und am hinteren Bereich der Halteeinrichtung 12 in Richtung zum Lufteintrittsbereich der Luftführungseinrichtung 8 wieder austreten kann.

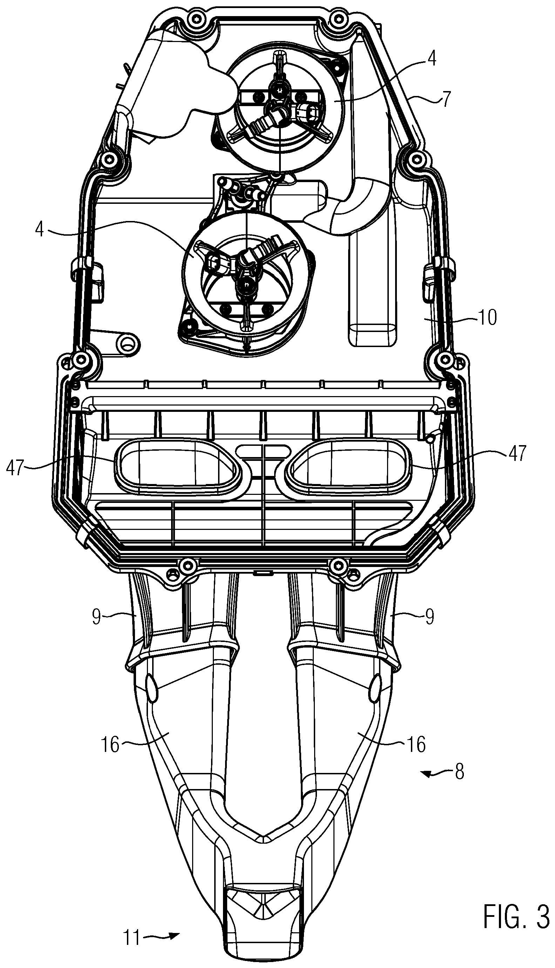

Wie es anhand von Fig. 3 der Zeichnung ersichtlich ist, weist die Luftführungseinrichtung 8 zwei abschnittsweise parallel verlaufende Luftführungskanäle 16 auf, welche am in der Zeichnung hinteren Bereich in die Ansaugluftleitungen 9 münden. Die Luftführungskanäle 16 besitzen dabei im Bereich der Ansaugluftleitungen 9 einen jeweiligen komplementär zum Einlassbereich der Ansaugluftleitungen 9 ausgebildeten Endbereich, sodass die Luftführungskanäle 16 mit den Ansaugluftleitungen 9 in der Form einer gesteckten Verbindung lösbar miteinander verbunden werden können, ohne dass hierzu Werkzeugeinsatz bei der Montage erforderlich ist.

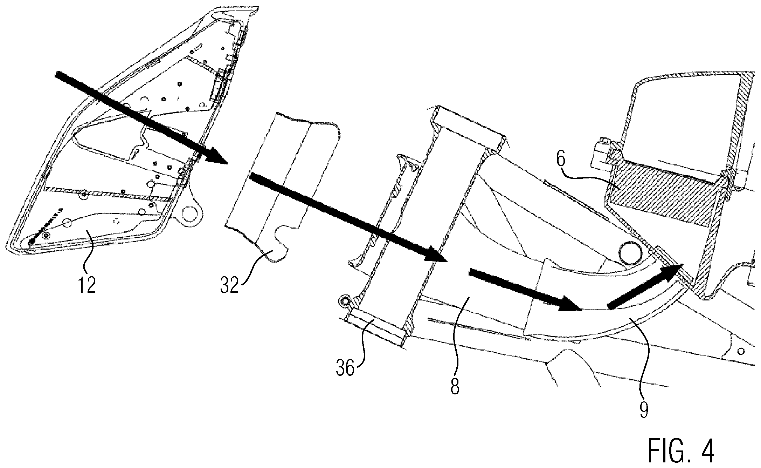

Die Ansaugluftleitungen 9 sind dabei gekrümmt ausgebildet und münden in einer jeweiligen Einlassöffnung 47 des Gehäuses 7, wobei es aufgrund der Anordnung und Ausbildung der erfindungsgemäßen Luftansaugvorrichtung 1 über einen Lufteintritt am vorderen Bereich des Luftleitkanals 15, wie dies in Fig. 4 der Zeichnung dargestellt ist, und der weiteren Führung der Luft über die Luftführungseinrichtung 8 und die Ansaugluftleitung 9 in Richtung zum Luftfilterelement 6 zu einer die Leistung der Brennkraftmaschine 3 fördernden Staudruckaufladung kommt.

Fig. 5 der Zeichnung zeigt eine perspektivische Darstellung der multifunktionalen Halteeinrichtung 12 der erfindungsgemäßen Luftansaugvorrichtung 1.

Die Halteeinrichtung 12 weist zwei Seitenwände 17 auf, welche zwischen sich den Luftleitkanal 15 einschließen, der von den Seitenwänden 17 und einem ersten oder oberen Körperelement 18 sowie einem zweiten oder unteren Körperelement 19 des Körpers 46 ausgebildet ist und am vorderen oder stirnseitigen Bereich einen Lufteintrittsbereich 20 und am hinteren oder rückwärtigen Bereich, der dem Lufteintrittsbereich 22 der Luftführungseinrichtung 8 zugeordnet ist, einen Luftaustrittsbereich 21 aufweist.

Der Luftleitkanal 15 dient so der Führung der Ansaugluft durch die Halteeinrichtung 12 hindurch bis in den Lufteintrittsbereich 22 der Luftführungseinrichtung 8. Die Halteeinrichtung 12 ist bei der dargestellten Ausführungsform der Luftansaugvorrichtung 1 aus einer Leichtmetalllegierung gebildet, beispielsweise einer Aluminiumlegierung, sodass die durch den Luftleitkanal 15 hindurch tretende Ansaugluft während ihres gesamten Wegs durch den Luftleitkanal 15 hindurch mit den Seitenwänden 17 der Halteeinrichtung 12 in Kontakt kommt und auf diesem Weg Wärme von den Seitenwänden 17 abführen kann, die an diese von den Leuchtmitteln 25 abgegeben wird.

Fig. 5 der Zeichnung zeigt eine Aufnahmefläche 23, welche zur Anordnung mindestens eines Leuchtmittels 25 ausgebildet ist und eine Fläche 24 aufweist, an der die von dem oder den Leuchtmitteln 25, welche in Fig. 1 der Zeichnung schematisch dargestellt sind, abgegebene Wärme an die Halteeinrichtung 12 und hier insbesondere an die Seitenwände 17 übertragen werden, und die Wärme über die den Luftleitkanal 15 durchsetzende Ansaugluft abgeführt wird, sodass die Halteeinrichtung 12 einerseits der Luftführung der Ansaugluft dient und andererseits auch der Abführung von Wärme der Leuchtmittel 25, die als Leuchtdioden ausgebildet sein können und zudem einen Aufnahmekörper für die Anordnung der Leuchtmittel 25 ausbildet.

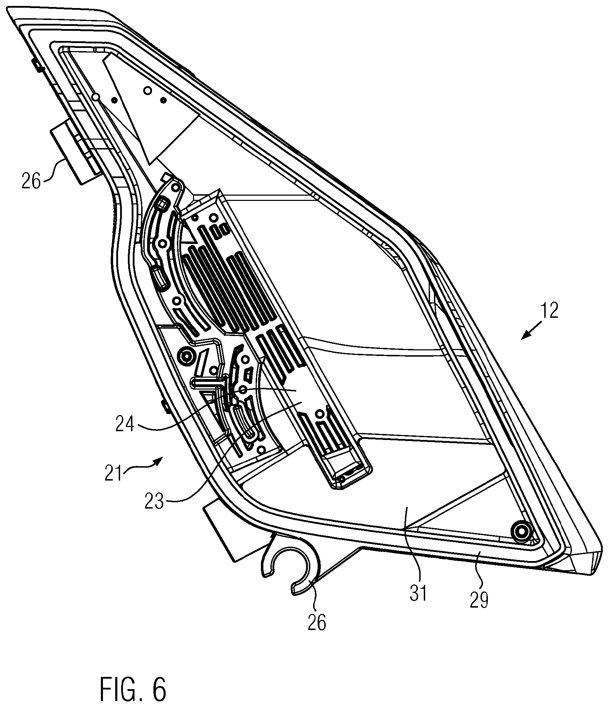

Fig. 6 der Zeichnung zeigt die Halteeinrichtung 12 in einer Darstellung von der rechten Seite und macht deutlich, dass die Halteeinrichtung 12 beidseitig ihrer Längsmittelebene jeweils eine Aufnahmefläche 23 für Leuchtmittel 25 und eine Fläche 24 für die Abführung der von den Leuchtmitteln 25 abgegebenen Wärme an die Seitenwände 17 aufweist.

Die Leuchtmittel 25 können dabei an den Flächen 24 beispielsweise über die Leuchtmittel tragende Aufnahmen in der Form von beispielsweise nicht näher dargestellten Leiterplatten angeordnet sein, und die Anordnung der Leiterplatten an den Flächen 24 dazu führt, dass die von den Leuchtdioden 25 abgegebene Wärme über die Leiterplatten an die Aufnahmeflächen 23 abgegeben wird, die von dort über Wärmeleitung und/oder Konvektion und/oder Strahlung an die Seitenwände 17 übertragen wird und dort von der durch den Luftleitkanal 15 durchströmenden Ansaugluft abgeführt wird.

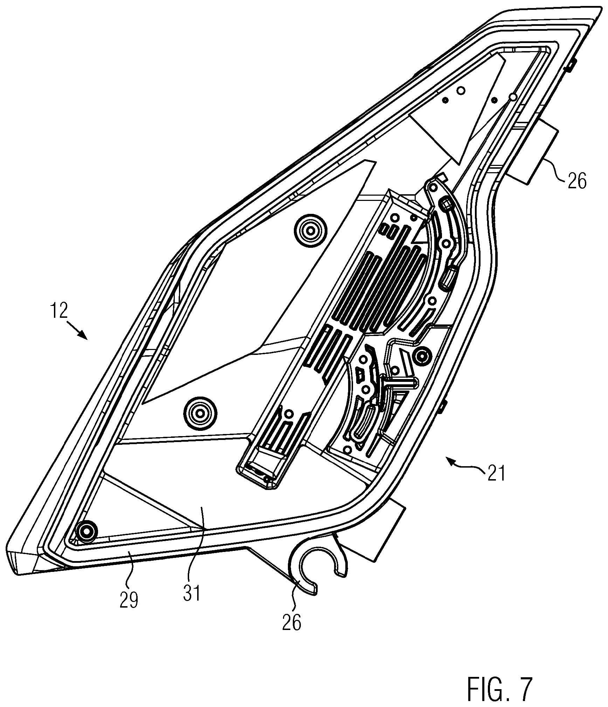

Wie es beispielsweise anhand von Fig. 7 der Zeichnung dargestellt ist, weist die Halteeinrichtung 12 in einer Seitenansicht eine weitgehend dreieckförmige Konfiguration auf und besitzt Aufnahmen 26, die der Anordnung der Halteeinrichtung 12 an Rahmenbauteilen 27 des Motorrads 2 dienen, wie dies in Fig. 13 der Zeichnung dargestellt ist.

Die Halteeinrichtung 12 weist an beiden Seitenwänden 17 am vom Luftleitkanal 15 beabstandeten äußeren Bereich 28 als umlaufende Nuten 30 ausgebildete Aufnahmeflächen 29 für die Anordnung der in Fig. 1 der Zeichnung dargestellten Abdeckscheiben 13 auf, die den jeweiligen Aufnahmeraum 31 der Halteeinrichtung 12 für die Anordnung der Leuchtmittel 25 überdecken und nach außen abschließen.

Auf diese Weise sind die Leuchtmittel 25 gegen Umwelteinflüsse in der Form von beispielsweise Regen und Schmutz geschützt und können über die transparent ausgebildeten Abdeckscheiben 13 Licht abstrahlen.

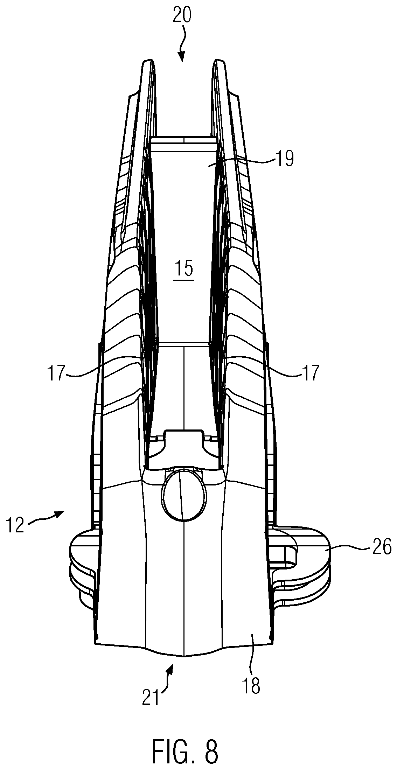

Fig. 8 der Zeichnung zeigt eine Ansicht auf die Halteeinrichtung 12 von oben. Wie es ohne weiteres ersichtlich ist, ist der Luftleitkanal 15 zwischen den Seitenwänden 17 vom Lufteintrittsbereich 20 aus betrachtet in Richtung zum Luftaustrittsbereich 21 sich verjüngend ausgebildet. Diese Konfiguration sorgt dafür, dass die durch den Luftleitkanal 15 strömende Ansaugluft auf ihrem Weg durch den Luftleitkanal 15 hindurch eine Strömungsbeschleunigung erfährt und somit eine die Leistung der Brennkraftmaschine 3 fördernde Konfiguration über die damit erreichte Verbesserung des Füllungsgrads der Brennräume der Brennkraftmaschine 3 erreicht wird.

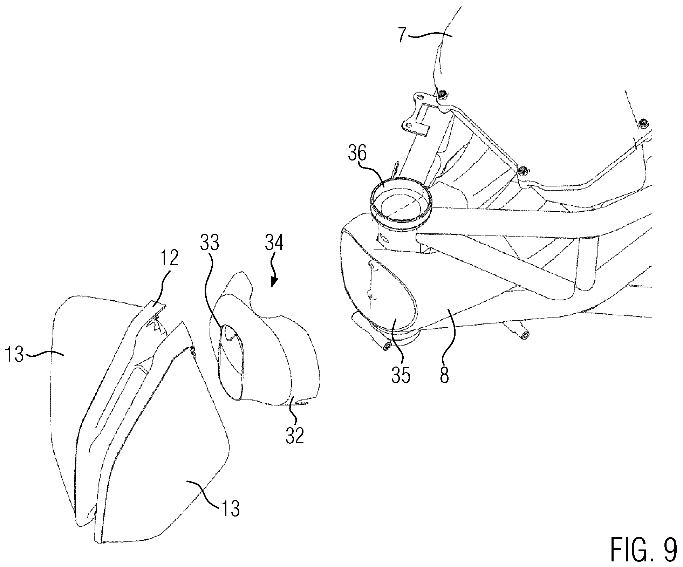

Fig. 9 der Zeichnung zeigt eine modifizierte Ausführungsform der Luftansaugvorrichtung 1, die sich von der in Fig. 1 dargestellten Ausführungsform dadurch unterscheidet, dass zwischen der Halteeinrichtung 12 und der Luftführungseinrichtung 8 ein Luftführungstrichter 32 vorgesehen ist, der einen Trichtereinlaufbereich 33 aufweist, der form- und flächenkomplementär zu dem Luftaustrittsbereich 21 der Halteeinrichtung 12 ausgebildet ist und einen sich erweiternden Trichterauslaufbereich 34 besitzt, der form- und flächenkomplementär zu dem Einlassbereich 35 ausgebildet ist.

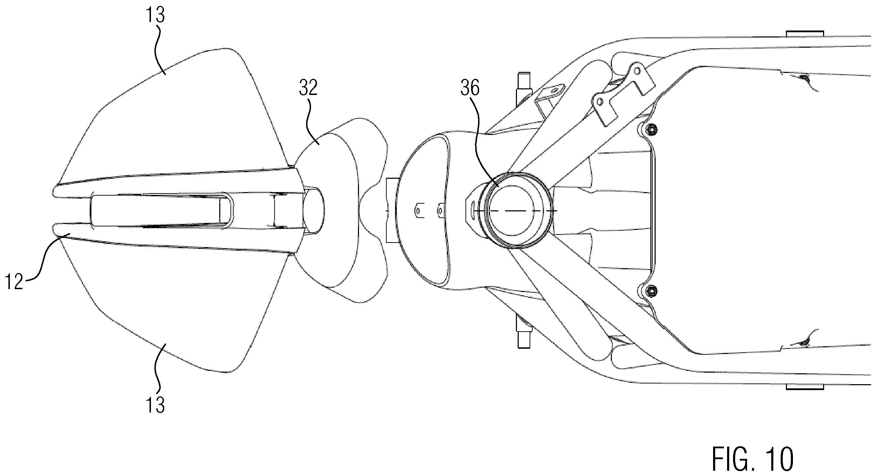

Fig. 10 der Zeichnung zeigt, dass der Luftführungstrichter 32 zusammen mit der Halteeinrichtung 12 bei einer Lenkbewegung am Motorrad 2 um das Lenkkopflagerrohr 36 herum verschwenkt werden kann und aufgrund seiner zum Einlassbereich 35 der Luftführungseinrichtung 8 form- und flächenkomplementären Ausbildung ohne die Ausbildung eines sich vergrößernden Spaltbereichs zwischen dem Einlassbereich 35 und dem Trichterauslassbereich 34 verschwenkt werden kann und somit eine Verschlechterung der Strömungscharakteristik der durch die Luftansaugvorrichtung 1 bereitgestellten Ansaugluft aufgrund einer Lenkbewegung am Motorrad vermieden werden kann. Der Luftführungstrichter 32 kann aus einem Elastomer gebildet sein, beispielsweise einem gummiartigen Werkstoff, der sich an den Trichtereinlaufbereich 33 des Luftführungstrichters 32 anschmiegt.

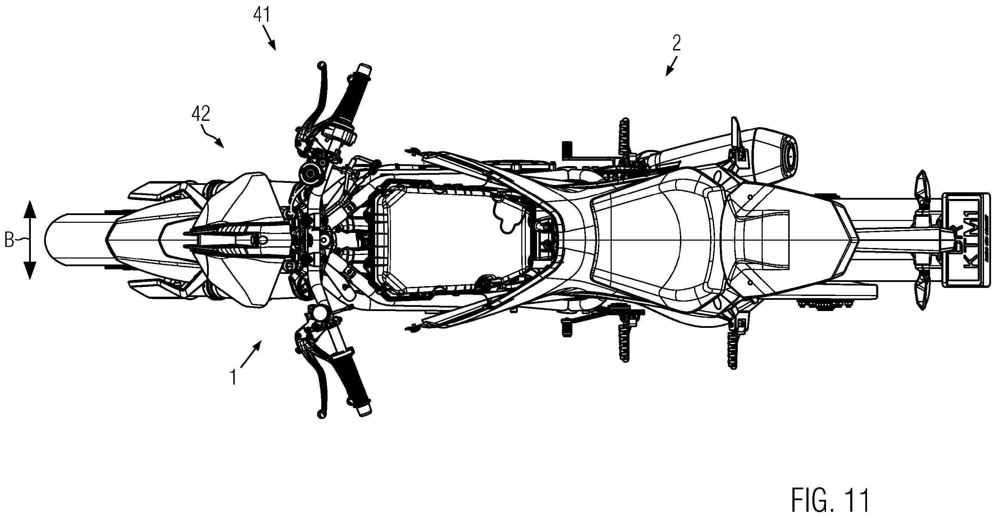

Fig. 11 der Zeichnung zeigt eine Ansicht von oben auf ein mit der erfindungsgemäßen Luftansaugvorrichtung 1 ausgestattetes Motorrad 2.

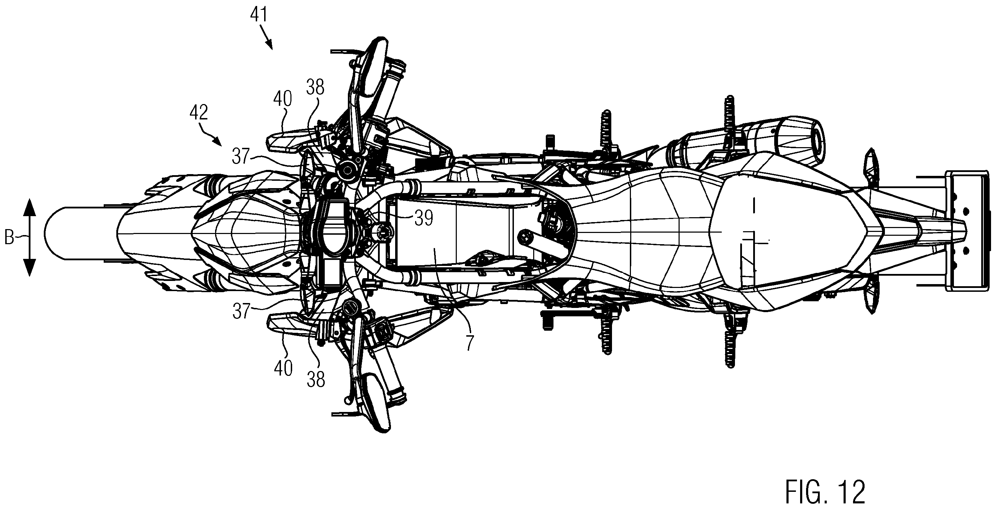

Im Vergleich hierzu zeigt Fig. 12 der Zeichnung ein auf die Anmelderin zurückgehendes und mit der bekannten Luftansaugvorrichtung ausgestattetes bekanntes Motorrad in einer Ansicht von oben. Die bekannte Luftansaugvorrichtung weist mit dem Bezugszeichen 37 versehene Lufteinlassbereiche in Luftführungskanäle 38 auf, welche um das Lenkkopflagerohr 39 herum verlaufen und von außen von Verkleidungsbauteilen 40 abgedeckt sind.

Wird nun dieser Stirnflächenbereich 41 des bekannten Motorrads nach Fig. 12 der Zeichnung mit dem Stirnflächenbereich 41 des Motorrads 2 mit der Luftansaugvorrichtung 1 nach der Erfindung verglichen, so wird sofort klar, dass die Stirnfläche 42 des bekannten Motorrads aufgrund der deutlich größeren Breitenerstreckung der Stirnfläche 42 des bekannten Motorrads in Richtung des Doppelpfeils B im direkten Vergleich mit der Stirnfläche 42 des Motorrads nach Fig. 11 der Zeichnung wesentlich größer ist und daher auch der Luftwiderstand größer ist.

Die Verringerung des Luftwiderstands des Motorrads 2 mit der erfindungsgemäßen Luftansaugvorrichtung sorgt für eine hinsichtlich des erreichbaren Kraftstoffverbrauchs effizientere Konfiguration und sorgt außerdem dafür dass der optische Gesamteindruck des Motorrads aufgrund der in Breitenrichtung schlankeren Konfiguration des Motorrads 2 verbessert wird.

Fig. 13 der Zeichnung zeigt ein mit der erfindungsgemäßen Luftansaugvorrichtung 1 versehenes Motorrad 2 in einer Seitenansicht, wobei das Motorrad ein Vorderrad 42, ein Hinterrad 43, einen Fahrersattel 44 und die bereits erwähnte Brennkraftmaschine 3 aufweist.

Wie es ohne weiteres anhand von Fig. 13 der Zeichnung ersichtlich ist, tritt - mit den Pfeilen 45 symbolisch dargestellt - die Ansaugluft in den Luftleitkanal 45 ein und wird von dort über die Luftführungseinrichtung 8 und die Ansaugluftleitungen 9 zum Gehäuse 7 der erfindungsgemäßen Luftansaugvorrichtung 1 geführt. Die Halteeinrichtung 12 ist mit ihrem Luftleitkanal 15 sowohl zur Führung der Ansaugluft ausgebildet als auch zur Aufnahme der näher anhand von Fig. 1 der Zeichnung ersichtlichen Leuchtmittel 25 in der Form von Leuchtdioden ausgebildet und kann von den Leuchtdioden im Betrieb abgegebene Wärme über die den Luftleitkanal 15 durchströmende Ansaugluft abführen, sodass mit der erfindungsgemäßen Luftansaugvorrichtung eine multifunktionale Konfiguration geschaffen wurde.

Hinsichtlich vorstehend im Einzelnen nicht näher erläuterter Merkmale der Erfindung wird in übrigen ausdrücklich auf die Patentansprüche und die Zeichnung verwiesen.

### Bezugszeichenliste

- 1.: Luftansaugvorrichtung
- 2.: Motorrad
- 3.: Brennkraftmaschine
- 4.: Trichter
- 5.: Drosselklappenkörper
- 6.: Luftfilterelement
- 7.: Gehäuse
- 8.: Luftführungseinrichtung
- 9.: Ansaugluftleitung
- 10.: Innenraum
- 11.: Lufteintrittsbereich
- 12.: Halteeinrichtung
- 13.: Abdeckscheibe
- 14.: Schlauch
- 15.: Luftleitkanal
- 16.: Luftführungskanäle
- 17.: Seitenwand
- 18.: Erstes Körperelement
- 19.: Zweites Körperelement
- 20.: Lufteintrittsbereich
- 21.: Luftaustrittsbereich
- 22.: Lufteintrittsbereich
- 23.: Aufnahmefläche
- 24.: Fläche
- 25.: Leuchtmittel
- 26.: Aufnahme
- 27.: Rahmen
- 28.: Bereich
- 29.: Aufnahmefläche
- 30.: Nut
- 31.: Aufnahmeraum
- 32.: Luftführungstrichter
- 33.: Trichtereinlaufbereich
- 34.: Trichterauslaufbereich
- 35.: Einlassbereich
- 36.: Lenkkopflagerohr
- 37.: Lufteinlassbereich
- 38.: Luftführungskanal
- 39.: Lenkkopflagerohr
- 40.: Verkleidungsbauteile
- 41.: Stirnflächenbereich
- 42.: Vorderrad
- 43.: Hinterrad
- 44.: Fahrersattel
- 45.: Pfeile
- 46.: Körper
- 47.: Einlassöffnung

- B:: Breitenerstreckung

## Patentansprüche

1. Luftansaugvorrichtung (1) für ein mit einer Brennkraftmaschine (3) ausgestattetes Fahrzeug (2), mit einer gereinigte Ansaugluft für die Verbrennung in Richtung zur Brennkraftmaschine (3) führenden Einrichtung (4) und einem Luftfilterelement (6) sowie einem das Luftfilterelement (6) aufnehmenden Luftfiltergehäuse (7) und mindestens einer Luftführungseinrichtung (8), welche kanalförmig ausgebildet und zur Führung von Ansaugluft zum Luftfiltergehäuse (7) vorgesehen ist und sich die Luftführungseinrichtung (8) im Bereich zwischen einer Halteeinrichtung (12) und dem Luftfiltergehäuse (7) erstreckt, **dadurch gekennzeichnet, dass** die Halteeinrichtung (12) beidseits einer in Fahrtrichtung vertikalen Längsmittelebene eine Seitenwand (17) mit einer Aufnahmefläche (23) besitzt, an der eine jeweilige Leiterplatte mit mindestens einem an der Leiterplatte angeordneten Leuchtmittel (25) angeordnet ist, und die jeweilige Aufnahmefläche (23) eine Fläche (24) aufweist, welche zur Übertragung von vom Leuchtmittel (25) abgegebener Wärme an die jeweilige Seitenwand (17) eingerichtet ist, und die Halteeinrichtung (12) einen zu den Leuchtmitteln (25) benachbarten Luftleitkanal (15) aufweist, der mit der Luftführungseinrichtung (8) luftführend verbunden ist, wobei der Luftleitkanal (15) zwischen den einander gegenüberliegenden Seitenwänden (17) der Halteeinrichtung (12) ausgebildet ist.

2. Luftansaugvorrichtung (1) nach Anspruch 1, **dadurch gekennzeichnet, dass** die Luftführungseinrichtung (8) mindestens zwei abschnittsweise parallel verlaufende Luftführungskanäle (16) aufweist, die an einem stromaufwärts gelegenen Endbereich einstückig miteinander verbunden ausgebildet sind.

3. Luftansaugvorrichtung nach Anspruch 1 oder 2, **gekennzeichnet durch** einen jeweiligen Luftführungskanal (16), der mittels einer gekrümmt ausgebildeten Ansaugluftleitung (9) mit einer Einlassöffnung des Luftfiltergehäuses (7) luftführend verbunden ist und ein jeweiliger stromabwärts gelegener Endbereich des Luftführungskanals (16) mit einem zugeordneten Anschlußbereich der Ansaugluftleitung (9) in der Form einer gesteckten Verbindung lösbar verbindbar ausgebildet ist.

4. Luftansaugvorrichtung (1) nach einem der vorstehenden Ansprüche, **dadurch gekennzeichnet, dass** die Halteeinrichtung (12) ein mit dem zwischen den Seitenwänden (17) angeordneten Luftleitkanal (15) ausgebildeter Körper (46) ist, der die Seitenwände (17) verbindende und zusammen mit den Seitenwänden (17) den Luftleitkanal (15) einschließende erste (18) und zweite (19) Körperelemente aufweist und einen Lufteintrittsbereich (21) sowie einen der Luftführungseinrichtung (8) zugewandten Luftaustrittsbereich (22) aufweist.

5. Luftansaugvorrichtung (1) nach einem der vorstehenden Ansprüche, **dadurch gekennzeichnet, dass** die Halteeinrichtung (12) an einem der Luftführungseinrichtung (8) zugewandten Endbereich des Luftleitkanals (15) eine zur Konfiguration eines Lufteintrittsbereichs (22) der Luftführungseinrichtung (8) form- und flächenkomplementäre Konfiguration aufweist.

6. Luftansaugvorrichtung (1) nach einem der Ansprüche 2 bis 5, **dadurch gekennzeichnet, dass** die Halteeinrichtung (12) an vom Luftführungskanal (16) abgewandten Außenbereichen der Seitenwände (17) Aufnahmeflächen (29) zur Anordnung von die Leuchtmittel (25) überdeckenden Abdeckscheiben (13) aufweist.

7. Luftansaugvorrichtung (1) nach einem der vorstehenden Ansprüche, **dadurch gekennzeichnet, dass** die Seitenwände (17) der Halteeinrichtung (12) in einer Seitenansicht zur Fahrtichtung eine dreieckförmige Konfiguration aufweisen und obere Bereiche der Seitenwände (17) bezüglich einer Hochachse des Fahrzeugs mit dem ersten Körperelement (18) einstückig ausgebildet sind und die Seitenwände (17) im Abstand zu unteren Bereichen der Seitenwände (17) mit dem zweiten Körperelement (19) einstückig ausgebildet sind.

8. Luftansaugvorrichtung nach Anspruch 7, **dadurch gekennzeichnet, dass** der Luftleitkanal (15) zwischen den Seitenwänden (17) und den einstückig ausgebildeten Bereichen der Halteeinrichtung (12) ausgebildet ist.

9. Luftansaugvorrichtung (1) nach einem der vorstehenden Ansprüche, **dadurch gekennzeichnet, dass** die Halteeinrichtung (12) zu einer Hochachse des Fahrzeugs (2) verschwenkbar in einem Luftanströmbereich des Fahrzeugs (2) angeordnet ist.

10. Luftansaugvorrichtung (1) nach einem der Ansprüche 2 bis 9, **dadurch gekennzeichnet, dass** der stromaufwärts gelegene Endbereich der Luftführungseinrichtung (8) einen sich in Richtung zum Lufteintrittsbereich (22) querschnittlich erweiternden Übergangsbereich besitzt, welcher dem Luftleitkanal (15) der Halteeinrichtung (12) zugeordnet ist.

11. Fahrzeug (2) mit mindestens einem Vorderrad (42) sowie mindestens einem Hinterrad (43) und einer Brennkraftmaschine (2), **gekennzeichnet durch** eine Luftansaugvorrichtung (1) nach einem der vorstehenden Ansprüche.

## Claims

1. Air intake device (1) for a vehicle (2) equipped with an internal combustion engine (3), with a device (4) guiding purified intake air for combustion in the direction of the internal combustion engine (3) and an air filter element (6) as well as an air filter housing (7) accommodating the air filter element (6) and at least one air guide device (8), which is duct-shaped and is provided for guiding intake air to the air filter housing (7) and the air guiding device (8) extends in the region between a holding device (12) and the air filter housing (7), **characterised in that in that** the holding device (12) has a side wall (17) with a receiving surface (23) on both sides of a longitudinal centre plane which is vertical in the direction of travel and on which a respective printed circuit board with at least one illuminant (25) arranged on the printed circuit board is arranged, and the respective receiving surface (23) has a surface (24), which is set up for transferring heat emitted by the illuminant (25) to the respective side wall (17), and the holding device (12) has an air guide duct (15) which is adjacent to the illuminants (25) and is connected to the air guide device (8) in an air-guiding manner, the air guide duct (15) being formed between the opposing side walls (17) of the holding device (12).

2. Air intake device (1) according to claim 1, **characterised in that** the air guide device (8) has at least two air guide ducts (16) which run parallel in sections and are integrally connected to one another at an upstream end region.

3. Air intake device according to claim 1 or 2, **characterised by** a respective air guide duct (16) which is connected in an air-guiding manner to an inlet opening of the air filter housing (7) by means of a curved intake air duct (9), and a respective downstream end region of the air guide duct (16) is designed to be detachably connectable to an associated connection region of the intake air duct (9) in the form of a plugged connection.

4. Air intake device (1) according to one of the preceding claims, **characterised in that** the holding device (12) is a body (46) formed with the air guide channel (15) arranged between the side walls (17), which body has first (18) and second (19) body elements connecting the side walls (17) and enclosing the air guide channel (15) together with the side walls (17) and has an air inlet region (21) and an air outlet region (22) facing the air guide device (8).

5. Air intake device (1) according to one of the preceding claims, **characterised in that** the holding device (12) has, at an end region of the air guide duct (15) facing the air guide device (8), a configuration complementary in shape and area to the configuration of an air inlet region (22) of the air guide device (8).

6. Air intake device (1) according to one of claims 2 to 5, **characterised in that** the holding device (12) has receiving surfaces (29) on outer regions of the side walls (17) facing away from the air duct (16) for the arrangement of cover plates (13) covering the illuminants (25).

7. Air intake device (1) according to one of the preceding claims, **characterised in that** the side walls (17) of the holding device (12) have a triangular configuration in a side view with respect to the direction of travel and upper regions of the side walls (17) are formed in one piece with the first body element (18) with respect to a vertical axis of the vehicle and the side walls (17) are formed in one piece with the second body element (19) at a distance from lower regions of the side walls (17).

8. Air intake device according to claim 7, **characterised in that** the air guide channel (15) is formed between the side walls (17) and the integrally formed regions of the holding device (12).

9. Air intake device (1) according to one of the preceding claims, **characterised in that** the holding device (12) is arranged pivotably relative to a vertical axis of the vehicle (2) in an air inflow region of the vehicle (2).

10. Air intake device (1) according to one of claims 2 to 9, **characterised in that** the upstream end region of the air guide device (8) has a transition region which widens cross-sectionally in the direction of the air inlet region (22) and which is associated with the air guide channel (15) of the holding device (12).

11. Vehicle (2) with at least one front wheel (42) and at least one rear wheel (43) and an internal combustion engine (2), **characterised by** an air intake device (1) according to one of the preceding claims.

## Revendications

1. Dispositif d'aspiration d'air (1) pour un véhicule (2) équipé d'un moteur à combustion interne (3), avec un dispositif (4) conduisant l'air d'aspiration épuré pour la combustion en direction du moteur à combustion interne (3) et un élément de filtre à air (6) ainsi qu'un boîtier de filtre à air (7) recevant l'élément de filtre à air (6) et au moins un dispositif de guidage d'air (8), qui est réalisé en forme de canal et est prévu pour guider l'air d'aspiration vers le bo tier de filtre à air (7) et le dispositif de guidage d'air (8) s'étend dans la zone entre un dispositif de retenue (12) et le bo tier de filtre à air (7), **caractérisé, en ce que** le dispositif de retenue (12) possède, des deux côtés d'un plan médian longitudinal vertical dans le sens de la marche, une paroi latérale (17) avec une surface de réception (23) sur laquelle est disposée une carte de circuit imprimé respective avec au moins un moyen d'éclairage (25) disposé sur la carte de circuit imprimé, et la surface de réception respective (23) présente une surface (24), qui est conçue pour transmettre à la paroi latérale (17) respective la chaleur dégagée par le moyen d'éclairage (25), et le dispositif de maintien (12) présente un canal de guidage d'air (15) voisin des moyens d'éclairage (25), qui est relié au dispositif de guidage d'air (8) de manière à guider l'air, le canal de guidage d'air (15) étant formé entre les parois latérales (17) opposées du dispositif de maintien (12).

2. Dispositif d'aspiration d'air (1) selon la revendication 1, **caractérisé en ce que** le dispositif de guidage d'air (8) présente au moins deux canaux de guidage d'air (16) s'étendant parallèlement par sections, qui sont réalisés d'une seule pièce l'un avec l'autre dans une zone d'extrémité située en amont.

3. Dispositif d'aspiration d'air selon la revendication 1 ou 2, **caractérisé par** un canal de guidage d'air respectif (16), qui est relié de manière à guider l'air au moyen d'une conduite d'air d'aspiration (9) de forme courbe à une ouverture d'entrée du bo tier de filtre à air (7), et une zone d'extrémité respective située en aval du canal de guidage d'air (16) est réalisée de manière à pouvoir être reliée de façon amovible à une zone de raccordement associée de la conduite d'air d'aspiration (9) sous la forme d'une liaison enfichée.

4. Dispositif d'aspiration d'air (1) selon l'une des revendications précédentes, **caractérisé en ce que** le dispositif de retenue (12) est un corps (46) formé avec le canal de guidage d'air (15) disposé entre les parois latérales (17), qui présente des premiers (18) et des deuxièmes (19) éléments de corps reliant les parois latérales (17) et enfermant avec les parois latérales (17) le canal de guidage d'air (15) et qui présente une zone d'entrée d'air (21) ainsi qu'une zone de sortie d'air (22) tournée vers le dispositif de guidage d'air (8).

5. Dispositif d'aspiration d'air (1) selon l'une des revendications précédentes, **caractérisé en ce que** le dispositif de retenue (12) présente, sur une zone d'extrémité du canal de guidage d'air (15) tournée vers le dispositif de guidage d'air (8), une configuration complémentaire en forme et en surface à la configuration d'une zone d'entrée d'air (22) du dispositif de guidage d'air (8).

6. Dispositif d'aspiration d'air (1) selon l'une des revendications 2 à 5, **caractérisé en ce que** le dispositif de retenue (12) présente, sur des zones extérieures des parois latérales (17) opposées au canal de guidage d'air (16), des surfaces de réception (29) pour l'agencement de vitres de recouvrement (13) recouvrant les moyens d'éclairage (25).

7. Dispositif d'aspiration d'air (1) selon l'une des revendications précédentes, **caractérisé en ce que** les parois latérales (17) du dispositif de retenue (12) présentent une configuration triangulaire dans une vue latérale par rapport à la direction de déplacement et des zones supérieures des parois latérales (17) par rapport à un axe vertical du véhicule sont formées d'un seul tenant avec le premier élément de corps (18) et les parois latérales (17) sont formées d'un seul tenant avec le deuxième élément de corps (19) à distance des zones inférieures des parois latérales (17).

8. Dispositif d'aspiration d'air selon la revendication 7, **caractérisé en ce que** le canal de guidage d'air (15) est formé entre les parois latérales (17) et les zones réalisées d'un seul tenant du dispositif de retenue (12).

9. Dispositif d'aspiration d'air (1) selon l'une des revendications précédentes, **caractérisé en ce que** le dispositif de retenue (12) est disposé de manière à pouvoir pivoter par rapport à un axe vertical du véhicule (2) dans une zone d'afflux d'air du véhicule (2).

10. Dispositif d'aspiration d'air (1) selon l'une des revendications 2 à 9, **caractérisé en ce que** la zone d'extrémité amont du dispositif de guidage d'air (8) possède une zone de transition qui s'élargit en section transversale en direction de la zone d'entrée d'air (22) et qui est associée au canal de guidage d'air (15) du dispositif de retenue (12).

11. Véhicule (2) comprenant au moins une roue avant (42) ainsi qu'au moins une roue arrière (43) et un moteur à combustion interne (2), **caractérisé par** un dispositif d'aspiration d'air (1) selon l'une des revendications précédentes.
